Europäisches Patentamt

(19) European Patent Office

Office européen des brevets

(11) Numéro de publication: **0 247 432**
**B1**

(12) **FASCICULE DE BREVET EUROPEEN**

(45) Date de publication du fascicule du brevet: **18.07.90**

(21) Numéro de dépôt: **87106892.0**

(22) Date de dépôt: **12.05.87**

(51) Int. Cl.⁵: **G 01 N 23/02**

(54) Bouchon pour ouverture d'accès d'une source radiographique de contrôle dans une tuyauterie ou un appareil.

(30) Priorité: **13.05.86 FR 8606850**

(43) Date de publication de la demande:
**02.12.87 Bulletin 87/49**

(45) Mention de la délivrance du brevet:
**18.07.90 Bulletin 90/29**

(84) Etats contractants désignés:
**BE CH DE ES FR GB IT LI NL**

(56) Documents cités:
**FR-A-2 507 778**

(73) Titulaire: **STEIN INDUSTRIE Société Anonyme dite:**
**19-21, avenue Morane Saulnier**
**F-78140 Vélizy Villacoublay (FR)**

(72) Inventeur: **Bobichon, Jacques**
**61 Chemin des Vaux Mourants**
**F-91370 Verrieres le Buisson (FR)**
Inventeur: **Hervouin, Lucien**
**3 rue Henri Barbusse**
**F-78280 Guyancourt (FR)**
Inventeur: **Vigneron, Gilbert**
**65 rue du Point du Jour**
**F-92100 Boulogne sur Seine (FR)**

(74) Mandataire: **Weinmiller, Jürgen et al**
**Lennéstrasse 9 Postfach 24**
**D-8133 Feldafing (DE)**

Courier Press, Leamington Spa, England.

## Description

La présente invention concerne un bouchon pour ouverture d'accès d'une source radiographique de contrôle dans une tuyauterie ou un appareil en acier allié à haute résistance mécanique, mais présentant de la fragilité au soudage, comprenant un élément cylindrique à fond ouvert, soudé sur la paroi de la tuyauterie ou de l'appareil, et en saillie sur celle-ci, en le même acier que le tuyauterie ou l'appareil, et un second élément cylindrique assurant la fermeture de l'alésage du premier élément.

Le brevet FR—B—2507778 de la demanderesse porte sur un bouchon de ce genre, dont le premier élément comporte un filetage interne, et le second élément est un élément interne à fond plein, à filetage externe, vissé sur le filetage interne du premier élément et soudé sur lèvres par son bord supérieur au bord supérieur de ce premier élément, et muni de moyens internes permettant de le dévisser.

Un tel bouchon permet d'effectuer un grand nombre de fois des contrôles de soudures de la tuyauterie ou de l'appareil à l'aide d'une source radiographique introduite dans celle-ci ou celui-ci, par dévissage du second élément, puis revissage de celui-ci après exécution d'un contrôle de la soudure.

Il n'est cependant pas possible d'effectuer une soudure sur l'èvres satisfaisante entre le premier et le second élément lorsque la tuyauterie ou l'appareil sont en un acier alié à haute résistance mécanique, ces aciers présentent une forte susceptibilité à la fissuration à la suite de traitements à chaud, et notamment d'une opération de soudage.

La présente invention a pour but de procurer un bouchon pour ouverture d'accès d'une source radiographique de contrôle dans une tuyauterie ou 'appareil en acier allié à haute résistance mécanique, qui permette d'effectuer un grand nombre de contrôles d'une soudure de cette tuyauterie ou de cet appareil, en dépit de la susceptibilité à la fissuration de tels aciers.

Le bouchon selon l'invention est caractérisé en ce que son second élément cylindrique est fixé sur l'extrémité externe du premier et dans son prolongement par une soudure en bout.

Le premier élément cylindrique est de préférence en le même acier que celui de la tuyauterie ou de l'appareil, et le second élément cylindrique est en un acier présentant une susceptibilité à la fissuration moindre. Il peut dependant être également de la même nuance que celui de la tuyauterie ou de l'appareil.

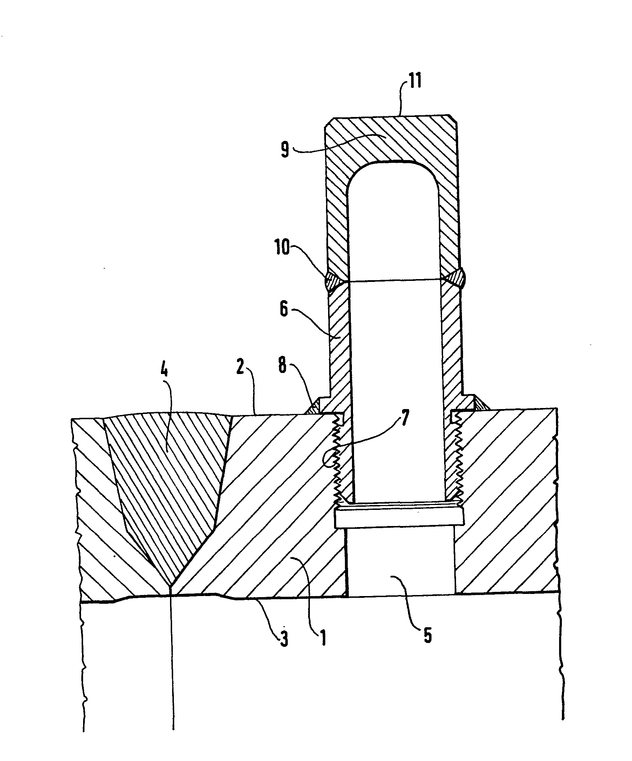

Il est décrit ci-après, à titre d'exemple et en référence à la figure unique du dessin annexé, un bouchon selon l'invention pour ouverture d'accès d'une source radiographique de contrôle dans une tuyauterie.

La tuyauterie 1 est en un acier allié à haute résistance mécanique. Ce peut être notamment l'acier commercialisé par la société Mannesmann Röhren-Werke AG sous la désignation X 20 Cr Mo V 121, contenant 0,17% à 0,23% de carbone, 0,10% à 0,50% de silicium, 0,30% à 0,80% de manganèse, 11% à 12,5% de chrome, 0,30 à 0,80% de nickel, 0,80% à 1,20% du molybdène et 0,25% à 0,35% de vanadium, ou l'acier commercialisé par la société Thyssen Röhren-Werke AG sous la désignation WSB 62 R, comprenant au plus 0,17% de carbone, de 0,25% à 0,50% de silicium, de 0,80% à 1,20% de manganèse, au plus 0,035% de phospore et de soufre, respectivement, 0,50% à 0,80% de cuivre, 1% à 1,30% de nickel, 0,25% à 0,40% de molybdène et au plus 0,30% de chrome.

La paroi de la tuyauterie 1 comporte une surface externe 2 et une surface interne 3. Cette tuyauterie comporte un cordon de soudure 4 dont on désire vérifier périodiquement la compacité par radiographie. Cette paroi est percée d'un trou cylindrique 5. Un premier élément 6 du bouchon est fixé dans l'alésage du trou par vissage dans un taraudage 7 de la partie supérieure de l'alésage. Il est fixé par ailleurs à la surface externe 2 de la paroi par une soudure circonférentielle 8.

Le second élément 9 du bouchon est en acier de résistance mécanique moins élevée, mais moins susceptible à la fissuration après soudage, par exemple en l'acier commercialisé par la société Vallourec sous le nom Chromesco 3, répondant aux désignations AFNOR TU 10 CD 9—10 et DIN 10 CR Mo 9—10, comprenant au plus 0,17% de carbone, de 0,20% à 0,70% de manganèse, au plus 0,035% de phosphore et de soufre, respectivement, de 0,05% à 0,55% de silicium, au plus 0,30% de nickel, de 1,90% à 2,60% de chrome, de 0,85% à 1,15% de molybdène, au plus 0,25% de cuivre et 0,03% d'étain, la teneur en étain pouvant cependant s'élever jusqu'à 0,04% si la teneur (Cu + 10Sn) ne dépasse pas 0,55%. Ce second élément, de même diamètres externe et interne que le premier, est soudé sur l'extrémité de celui-ci par une soudure bord à bord 10. Son fond 11 est plein.

Lorsque l'on veut effectueur les contrôles radiographiques successifs de la soudure 4, on opère comme suit.

Aprè avoir fixé l'élément 6 dans le trou 5 par vissage, puis par la soudure circonférentielle 8, on effectue le premier contrôle radiographique. Puis on retire la sonde radiographique, et soude le second élément 9 sur le premier 6 par la soudure bord à bord 10.

Lorsque l'on veut procéder à un nouveau contrôle, on élimine la soudure 10 par meulage ou à l'aide d'un coupe-tube. On peut alors introduire la sonde et effectuer une nouvelle radiographie. Celle-ci terminée, on retire la sonde et soude le second élément sur le premier par un nouvelle soudure en bout. L'étanchéité de cette soudure en bout peut elle-même être contrôlée par radiographie sans difficulté.

## Revendications

1. Bouchon pour ouverture d'accès d'une source radiographique de contrôle dans une tuyauterie ou un appareil en acier allié à haute résistance mécanique, mais présentant de la fragilité au soudage, comprenant un élément cylindrique (6) à fond ouvert, soudé (8) sur la paroi de la tuyauterie ou de l'appareil, et en saillie sur celle-ci, en le même acier que la tuyauterie ou l'appareil, et un second élément cylindrique (9) assurant la fermeture de l'alésage du premier élément, caractérisé en ce que le second élément cylindrique est fixé sur l'extrémité externe du premier et dans son prolongement par une soudure en bout (10).

2. Bouchon selon la revendication 1, caractérisé en ce que le premier élément cylindrique (6) est en le même acier que celui de la tuyauterie ou de l'appareil, et en ce que le second élément cylindrique (9) est en un acier présentant une susceptibilité à la fissuration moindre.

## Patentansprüche

1. Stopfen zum Verschluß einer Öffnung in einer Leitung oder einem Apparat aus legiertem Stahl hoher mechanischer Festigkeit, aber hoher Bruchgefahr beim Schweißen für ein Prüfstrahlungsquelle, wobei der Stopfen ein zylindrisches Element (6) mit offenem Boden, das mit der Wand der Leitung oder des Apparats verschweißt (8) ist, aus dem gleichen Stahl wie die Leitung oder der Apparat besteht und von der Wand absteht, sowie ein zweites zylindrisches Element (9) aufweist, das die Bohrung des ersten Elements verschließt, dadurch gekennzeichnet, daß das zweite zylindrische Element am äußeren Ende des ersten Elements und in dessen Verlängerung durch eine Stumpfschweißung (10) befestigt ist.

2. Stopfen nach Anspruch 1, dadurch gekennzeichnet, daß das erste zylindrische Element (6) aus demselben Stahl wie die Leitung oder der Apparat besteht und daß das zweite zylindrische Element aus einem Stahl mit einer geringeren Rißempfindlichkeit besteht.

## Claims

1. A plug for an opening providing entry for an X-ray test source into a pipework or an apparatus made of an alloyed steel which presents a high mechanical strength steel but is fragile in welding, the plug comprising an open-ended cylindrical element (6) welded to the wall of the pipework or of the apparatus and projecting therefrom, said element being made of the same steel as the pipework or the apparatus, and a second cylindrical element (9) for closing the bore of the first element, characterized in that the second cylindrical element is fixed to the outer end of the first element and in line therewith by means of a butt weld (10).

2. A plug according to claim 1, characterized in that the first cylindrical element (6) is made of the same steel as the pipework or the apparatus, and that the second cylindrical element (9) is made of a steel having a lower susceptibility to cracking.